Europäisches Patentamt

European Patent Office

Office européen des brevets

(11) Publication number: **0 104 835**
**A1**

(12) # EUROPEAN PATENT APPLICATION

(21) Application number: 83305390.3

(22) Date of filing: 15.09.83

(51) Int. Cl.³: **F 16 L 11/11**
**B 29 D 23/18**

(30) Priority: 29.09.82 GB 8227846
16.04.83 GB 8310358

(43) Date of publication of application:
04.04.84 Bulletin 84/14

(84) Designated Contracting States:
AT BE CH DE FR GB IT LI LU NL SE

(71) Applicant: STANDARD HOSE LIMITED
Owler Ings Mill Owler Ings Road
Brighouse West Yorkshire HD6 1EJ(GB)

(72) Inventor: Whitworth, Barrie Finbar
Lower Green House Hove Edge
Brighouse West Yorkshire(GB)

(74) Representative: Wharton, Peter Robert et al,
URQUHART-DYKES & LORD Beckett's Bank Chambers
19 Cheapside
Bradford BD1 4HR(GB)

(54) Hose pipe.

(57) A wire reinforced convoluted flexible hose pipe 10 has at least one end fitting 18 attached thereto. The pitch of the convolutions of the hose body 12 immediately adjacent to the end fitting is closer than the pitch of the convolutions over the remainder of the length of the hose. This provides additional resistance against damage caused by flexing in service without substantially increasing the weight or the manufacturing complexity of the hose.

Fig.1.

Croydon Printing Company Ltd

EP 0 104 835 A1

- 1 -

HOSE PIPE

This invention relates to hose pipes and in particular relates to wire reinforced convoluted flexible hose pipes.

Wire reinforced convoluted flexible plastics materials hose pipe such as those described in our UK Patent No. 1543586, are increasingly being used where it is necessary to transfer fluid through a flexible line, for example, when loading or unloading fluids from tankers. In order that such hose pipes can be connected to the source of or receptacle for the fluid, or that lengths of hose can be connected together to produce a longer line, end fittings are attached to the lengths of hose pipe. The end fittings are rigid, usually of metal, and are therefore inflexible. Thus the junction between the flexible pipe and the end fitting is subjected to high stresses in use and can often prove an occasion of failure of the hose. At this point the change from flexible to rigid material is abrupt and consequently excessive flexing or bending forces are experienced which may cause collapse of or damage to convoluted tubes thus weakening their resistance to, for example, vacuum. Internal collapse, causing partial blockage of the through bore, is common in severe applications.

The invention seeks to provide a method of forming flexible hose pipe which reduces or overcomes the above disadvantage.

According to the present invention there is provided a wire reinforced convoluted flexible hose pipe having at least one end fitting attached thereto, in which the pitch of the convolutions of the hose immediately adjacent to the end fitting is closer than the pitch of the convolutions over the remainder of the length of the hose.

The invention further provides a method of manufacturing the above hose pipe which comprises taking a length of wire reinforced convoluted hose pipe whose convolutions are of a given pitch and either increasing the pitch of the convolution adjacent at least one end thereof or decreasing the pitch of the convolutions away from at least one end thereof, and thereafter stabilising the changed pitch and attaching at least one end fitting.

It will normally be preferred practice to manufacture the length of hose at the pitch of convolution desired for the greater portion for the length of the hose, that is the portion between the end fittings, and to compress the pitch of the portions adjacent the ends, to which the end fittings are to be attached. The stabilising of the change of pitch may be carried out by methods known in themselves, for example, cold compression or heat setting.

In order that the hose of the invention should perform adequately in service, it is preferred that the section of increased pitch adjacent the end fitting should extend into the rigid section of the end fitting and also for a sufficient distance out of the end fitting into the body of the hose pipe to allow for the maximum amount of flexing anticipated in service.

The construction in accordance with the invention has a
number of advantages. Firstly the weight of the hose
is not significantly increased and the bulk of the hose
at the ends is not increased either. No additional
materials need be applied during the hose manufacturing
operation and the properties of the main body of the
hose pipe are retained, for example lightness and relatively open convolution for easier purging and self
cleaning. The closer convolutions adjacent the end
fitting are also easily cleaned since they are restricted to the hose ends only where access to them can readily
be attained.

In accordance with another aspect of the present invention
there is provided a wire reinforced, flexible, convoluted
hose pipe having the wire reinforcement helically wound
in the roots of the convolutions in which the reinforcing
wire is held against circumferential movement at its
axial ends by having each extremity bent radially and
affixed to one of the other parts of the hose pipe.

The other parts of the hose pipe to which the radially
directed end of the wire may be affixed include the
convoluted hose body, an end fitting or a protective
covering, e.g. of wire braid. Where the end is
affixed to an end-fitting, which is currently preferred,
the fitting preferably has a suitable radially directed
hole or socket for receiving the wire end and holding it
against circumferential movement. This aspect of the
invention not only prevents unwinding of the wire but
reduces the possibility of the cut end of the wire
damaging the hose body. Furthermore, when employed
with the closer pitch convolutions discussed above it
enables the wire to be 'wound' tightly into the roots of
the closer pitch portion after formation and then locked
in place.

0104835

- 4 -

The invention will be described further, by way of example, with reference to the accompanying drawings, in which:

Figure 1 is a side view, partly in section, of a hose and end fitting constructed in accordance with the invention;

Figure 2 is a similar view to figure 1 showing a different form of end fitting;

Figure 3 is a similar view to figure 2 illustrating flexing of the hose in service;

Figure 4 is a similar view to figure 1 showing the wire retention; and

Figure 5 is a diagrammatic partial view of the hose illustrating the tightening of the reinforcing wire.

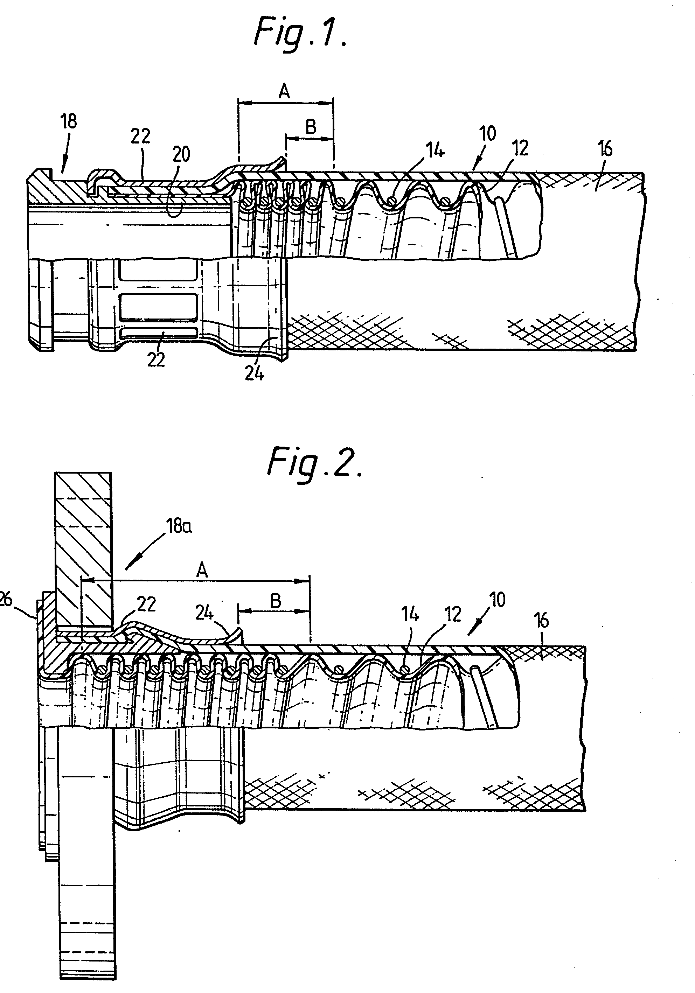

Referring to the drawings, and especially figure 1, a helically convoluted wire reinforced flexible plastics material hose generally designated 10 comprises a helically convoluted tube of plastics material 12 having a wire reinforcement 14 wound into the roots of the convolutions. Such a hose may be produced as described in our UK Patent No. 1543586. A braiding 16 may be applied to form an external protective covering of the hose 10. An end fitting 18 is provided, to the body 20 of which is clamped the free end of the convoluted plastics material 12 and the braid 16, the reinforcing wire being cut back short of this area. The ends of the plastics material 12 and braid 16 are clamped to the body 20 by means of a crimped clamping member 22 which has a belled end 24. A section of the hose adjacent the end thereof, marked 'A' in figure 1, is produced with convolutions of closer pitch by compressing the section and heat setting the plastics material. The closer pitch convolutions give the hose in that section a greater weight per unit length and a greater resistance to flexing.

It can be seen that the section 'A' is of sufficient length to extend within the end fitting 18 up to the body portion 20 thereof, and beyond the belled end 24 by an amount indicated as 'B' in figure 1.

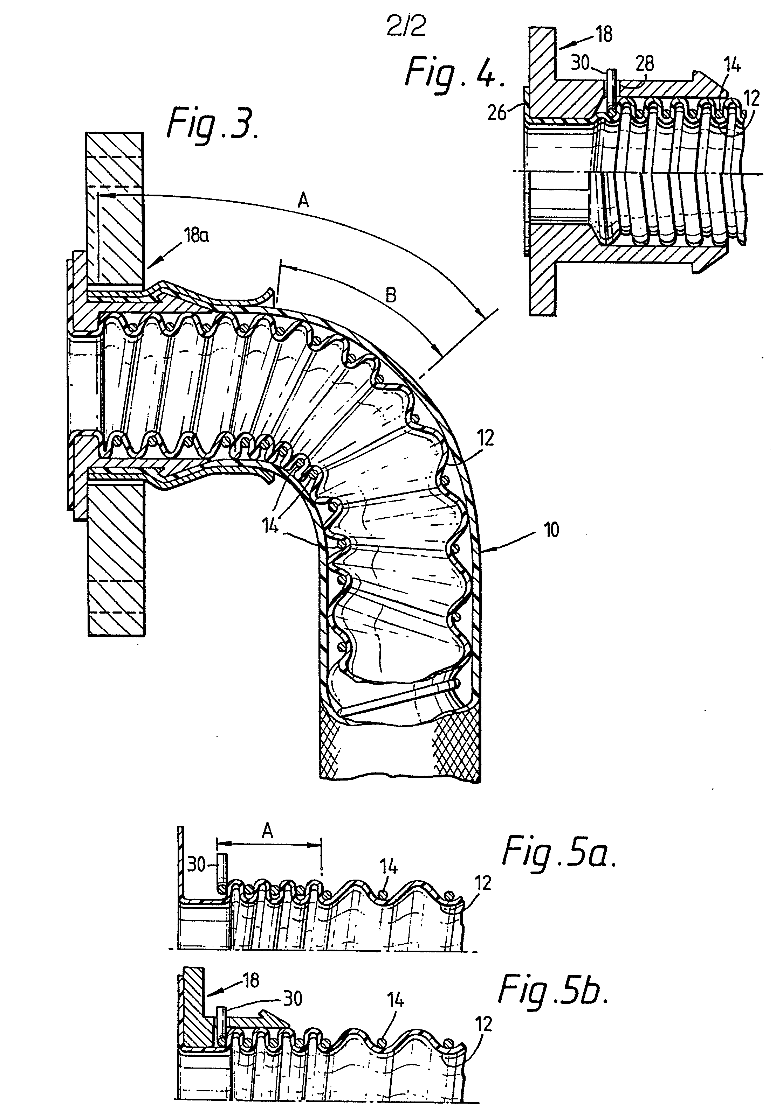

Similar construction, involving a different form of end fitting 18a, is shown in figure 2, in which like numerals denote like parts. In this case the plastics material tube 12 continues through the bore of the end fitting 18a and forms a flange 26 on the end face thereof. The braid covering 16 is held captive by a member 22 in a similar manner to that described in figure 1. Again the section A of closer pitch extends well into the end fitting 18a and beyond it by distance B into the main length of the hose 10.

Referring now to figure 3, this illustrates the hose and end fitting of figure 2 when subjected to bending in service. In figure 3 the hose 10 is illustrated as being bent through an angle of approximately 90° immediately adjacent the end fitting 18a. The closer pitch convolutions of the section A are able to absorb this bending strain without collapse of the plastics material tube 12 even under low pressure conditions since the increased number of turns of the supporting wire 14 in this area provides adequate support.

A hose pipe in accordance with the invention may be produced in a variety of ways, for example a length of hose pipe may be produced with initially close convolutions throughout and the main body central section being opened out either prior to or after the attachment of the end fitting.

It will be appreciated that the wire reinforcement 14 may be a wire or bead or shaped strip of metal, plastics, or other suitable material. Furthermore, the hose body 12 may be of plastics material, e.g. p.t.f.c., or other materials, e.g. metals such as stainless steel. The convolutions of the hose body 12 are preferably helical, but may be annular.

Figures 4 and 5 illustrate the way in which the wire reinforcement 14 may be secured at each end of the hose 10. Figure 4 shows an end fitting similar to that 18a in figure 2 which is provided with a radially directed hose 28 through which a radially bent end extremity 30 of the wire 14 is passed. This effectively locks the end of the wire 14 against the circumferential movement with respect to the hose body 12. In figure 5a there is illustrated diagrammatically a portion of a hose which has had the pitch of its convolutions reduced adjacent its end as described above in the area indicated by letter A. It can be seen that the reduction in pitch causes the helically wound reinforcement wire 14 in the area A to lift out of the roots of the convolutions. When the radially upturned end 30 is secured in the hole 28 in the end fitting 18, and before the latter is fixed into the hose body 12, the end fitting can be turned as indicated by arrow C in figure 5, in a circumferential direction thus 'winding' or tightening the reinforcement wire 14 back into the roots of the convolutions, after which the end fitting 18 can be secured with respect to the hose body 12.

Alternatively, where desired, the upturned end 30 may be fixed into the outer covering of the hose, for example the braiding 16. It has been found that in service as the hose is flexed the wire is worked into the braiding and locks even more firmly so ensuring that no unwinding can occur and reducing the possibility that the cut end of the wire could damage the hose body 12.

- 1 -

## CLAIMS

1. A wire reinforced convoluted flexible hose pipe having at least one end fitting attached thereto, in which the pitch of the convolutions of the hose immediately adjacent to the end fittings is closer than the pitch of the convolutions over the remainder of the length of the hose.

2. A hose as claimed in claim 1 in which the length of the section of increased pitch extends into the rigid portion of the end fitting and also for a sufficient distance out of the end fitting into the body of the hose pipe to allow for flexing in service.

3. A hose as claimed in either of claims 1 or 2 in which the hose body is a helically convoluted plastics material tube.

4. A hose as claimed in any of claims 1 to 3 in which the wire reinforcement comprises a metal wire helically wound into the roots of the convolutions.

5. A method of manufacturing the wire reinforced convoluted flexible hose pipe having a greater resistance to flexing adjacent its end fittings which comprises taking a length of wire reinforced convoluted hose pipe whose convolutions are of a given pitch and either increasing the pitch of the convolutions adjacent at least one end thereof or decreasing the pitch of the convolutions away from at least one end thereor, and thereafter stabilising the changed pitch and attaching at least one end fitting.

6.    A method as claimed in claim 5 in which portions of the hose adjacent the end thereof are compressed to a greater pitch than the remainder of the hose.

7.    A method as claimed in either of claims 5 or 6 in which the changed pitch is stabilised by means of heat setting.

8.    Wire reinforced flexible convoluted hose pipe having the wire reinforcement helically wound in the roots of the convolutions in which the reinforcing wire is held against circumferential movement at its axial ends by having each extremity bent radially and affixed to one of the other parts of the hose pipe.

9.    A hose as claimed in claim 8 in which the other part of the hose pipe to which the radially directed end of the wire is affixed is an end fitting or a protected covering of wire braid.

10.    A method as claimed in any one of claims 5 to 7 additionally comprising the steps of radially upturning the axial extremities of the reinforcement wire, locating the radially upturned end in a suitable receiving hole in the end fitting, circumferentially rotating the end fitting so as to tighten the reinforcement wire into the roots of the convolutions and securing the end fitting against rotation with respect to the hose body.

**Fig.1.**

**Fig.2.**

0104835

2/2

Fig. 4.

Fig. 3.

Fig. 5a.

Fig. 5b.

## DOCUMENTS CONSIDERED TO BE RELEVANT

EP 83305390.3

| Category | Citation of document with indication, where appropriate, of relevant passages | Relevant to claim | CLASSIFICATION OF THE APPLICATION (Int. Cl. ³) |
|---|---|---|---|
| A,P | DE - A1 - 3 120 895 (F. GROHE)<br>* Fig. 1,2 *<br>-- | 1,2,3 | F 16 L 11/11<br>B 29 D 23/18 |
| A | GB - A - 1 528 511 (METALL-SCHLAUCH FABRIK PFORZHEIM)<br>* Totality *<br>-- | 1,2 | |
| A | GB - A - 1 335 278 (L. WESTER-BARKEY)<br>* Totality *<br>-- | 1,2 | |
| A | WO - A1 - 81/00 748 (PLASTIFLEX COMPANY)<br>* Totality *<br>-- | 1,2 | |
| A | DE - B - 1 169 647 (HOOVER LTD.)<br>* Totality *<br>---- | 1,4,5 | |

**TECHNICAL FIELDS SEARCHED (Int. Cl. ³)**

F 16 L 11/00
F 16 L 33/00
B 29 D 23/00
B 29 H  7/00

The present search report has been drawn up for all claims

| Place of search | Date of completion of the search | Examiner |
|---|---|---|
| VIENNA | 13-12-1983 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82